# EUROPÄISCHE PATENTSCHRIFT

(11) **EP 2 234 795 B1**
(45) Veröffentlichungstag und Bekanntmachung des Hinweises auf die Patenterteilung: **28.09.2011**
(21) Anmeldenummer: 09703850.9
(22) Anmeldetag: 15.01.2009
(51) Int. Cl.: B29C 70/44, B29C 70/48, B29C 43/36

(54) **MEHRLAGIGES, FLEXIBLES FLÄCHENMATERIAL**
MULTILAYER, FLEXIBLE PLANAR MATERIAL
MATÉRIAU PLAT, FLEXIBLE, MULTICOUCHE

(30) Priorität: 25.01.2008 DE 102008006261
(43) Veröffentlichungstag der Anmeldung: 06.10.2010
(73) Patentinhaber: Trans-Textil GmbH, 83395 Freilassing (DE); EADS Deutschland GmbH, 85521 Ottobrunn (DE)
(72) Erfinder: UTECHT, Stefan, 86916 Kaufering (DE); KRINGS, Wilhelm, 83410 Laufen (DE); HÄNSCH, Manfred, 83404 Ainring (DE)
(74) Vertreter: Bauer, Friedrich
(86) Internationale Anmeldenummer: PCT/EP2009/000222
(87) Internationale Veröffentlichungsnummer: WO 2009/092543

(56) Entgegenhaltungen:
- DE-A1- 10 305 544
- DE-A1- 10 354 106
- US-A- 5 601 852

## Beschreibung

Die Erfindung betrifft ein mehrlagiges, flexibles Flächenmaterial zum Begrenzen eines Matrix-Zuführraums bei der Herstellung von faserverstärkten Kunststoff-Bauteilen aus Faserverbund-Halbzeugen mittels eines Injektionsverfahrens zur Injektion von Matrixmaterial, wobei das Flächenmaterial eine gasdurchlässige, jedoch matrix-undurchlässige Membran, eine gas-undurchlässige Folie sowie eine hoch gasdurchlässige Abstandshalterlage aufweist, die zwischen der Membran und der Folie angeordnet ist und die Folie auf Abstand zur Membran hält, wenn zwischen Membran und Folie ein Unterdruck erzeugt wird.

Bei der Herstellung von faserverstärkten Kunststoff-Bauteilen werden bekanntermaßen zunächst trockene Faserverbund-Halbzeuge, sogenannte Preforms, verwendet, die mit fließfähigem, aushärtbarem Matrixmaterial in Form von Harz getränkt werden. Das trockene Faserverbund-Halbzeug kann hierbei als Gewebe, als Multiaxialgelege oder als kettverstärktes unidirektionales Halbzeug vorliegen und besteht insbesondere aus Kohlefasern, Glasfasern, Aramidfasern,

Borfasern oder Hybridwerkstoffen.

Ein Verfahren zur Herstellung faserverstärkter Kunststoff-Bauteile ist als sogenanntes Resin Film Infusion (RFI)-Verfahren bekannt. Hierbei wird ein trockenes Kohlefasergewebe oder -gelege in einer Aushärtevorrichtung abgelegt und von außen mit einer definierten Harzfilmmenge belegt. Anschließend wird das aus den Kohlefasern und dem Harz bestehende Kunststoff-Bauteil in einem Autoklaven oder einem anderen Druckbehältniss unter Druck und Temperatur ausgehärtet. Die Verwendung von Druckbehältnissen und die hierfür notwendigen komplexen Werkzeuge sind jedoch sehr aufwendig. Weiterhin ist ein derartiges Verfahren hinsichtlich Temperaturen und Drücke schwer zu handhaben. Die zur Verfügung stehenden Autoklaven begrenzen darüber hinaus die Größe der herzustellenden Kunststoff-Bauteile.

Um diese Nachteile zu vermeiden, ist bereits ein in der DE 100 13 409 C1 beschriebenes Verfahren entwickelt worden, dass als "VAP" (Vacuum Assisted Process) bezeichnet wird. Bei diesem Verfahren wird ein mehrlagiges, flexibles Flächenmaterial gemäß dem Oberbegriff des Anspruches 1 verwendet, mit dem ein Matrix-Zuführraum begrenzt wird, in dem das Halbzeug angeordnet ist. Das Flächenmaterial besteht dort aus mehreren voneinander getrennten, unabhängig voneinander zu handhabenden Lagen, nämlich der gasdurchlässigen, jedoch matrix-undurchlässigen Membran, einer hoch gasdurchlässigen Abstandshalterlage sowie einer gas-undurchlässigen Folie. Diese Lagen werden nacheinander einzeln über eine Fließhilfschicht gelegt, die auf das Halbzeug aufgelegt wird. Wird nun der Bereich zwischen der Folie und der Membran evakuiert und dadurch ein Unterdruck aufgebaut, wird durch die Membran hindurch auch im innenliegenden Matrix-Zuführraum der Druck entsprechend abgesenkt, wodurch flüssiges Harz aus einem externen Harzbehälter in den Matrix-Zuführraum hinein gesaugt wird. Die Membran ermöglicht hierbei zwar ein Entweichen von Gasen aus dem Matrix-Zuführraum in die Abstandshalterlage hinein und von dort nach außen, hält jedoch gleichzeitig das Harz im Matrix-Zuführraum zurück, so dass es in das Halbzeug infiltrieren kann.

Obwohl dieses VAP-Verfahren gegenüber den Verfahren, bei denen Autoklaven verwendet werden, beträchtliche Vorteile bringt, besteht ein gewisses Problem darin, dass jede einzelne Lage des Flächenmaterials, nämlich die Membran, die Abstandshalterlage sowie die gas-undurchlässige Folie, nacheinander sehr exakt und spannungsfrei über das Halbzeug gelegt werden muss. Dies ist entsprechend zeitaufwendig und kann, falls dies nicht entsprechend exakt durchgeführt wird, die Prozesssicherheit negativ beeinflussen und zu ungleichmäßigen Anhäufungen von Matrixmaterial führen.

Der Erfindung liegt daher die Aufgabe zugrunde, ein mehrlagiges, flexibles Flächenmaterial der eingangs genannten Art zu schaffen, mit dem das VAP-Verfahren auf möglichst einfache, schnelle, kostengünstige und genaue Weise durchgeführt werden kann.

Diese Aufgabe wird erfindungsgemäß mit einem mehrlagigen, flexiblen Flächenmaterial mit den Merkmalen des Anspruches 1 gelöst. Vorteilhafte Ausführungsformen der Erfindung sind in den weiteren Ansprüchen beschrieben.

Beim erfindungsgemäßen Flächenmaterial besteht die Membran aus einer semipermeablen, mikroporösen Polyurethanmembran oder semipermeablen, mikroporösen ePTFE-Membran, auf die eine die Membran verstärkende Textillage auflaminiert ist. Die Abstandshalterlage ist auf der Textillage angeordnet. Die mikroporöse Membran, die Textillage sowie die Abstandshalterlage sind zusammen als Multifunktionslaminat ausgebildet und dadurch fest miteinander verbunden. "Multifunktionslaminat" bedeutet hierbei, dass ein aus mehreren, speziellen Lagen geschaffenes Laminat hergestellt wird, das gleichzeitig mehrere Funktionen erfüllt, nämlich zum einen die Funktion der Membran, welche einerseits Gas durchlässt und andererseits für das Matrixmaterial dicht ist, und zum anderen die Funktion der Abstandshalterlage, welche die gas-undurchlässige Folie auf Abstand zur Membran hält, wenn zwischen Membran und Folie ein Unterdruck erzeugt wird, so dass der Raum zwischen der Membran und der Folie offen bleibt.

Durch die feste Verbindung der einzelnen Lagen zu einem Laminat ist es nicht mehr erforderlich, diese Lagen einzeln nacheinander aufzulegen. Vielmehr kann dies in einem einzigen Arbeitsgang erfolgen. Dies verkürzt beträchtlich die Arbeitszeit zum Anordnen des Flächenmaterials über dem Halbzeug. Weiterhin wird jede Gefahr ausgeschlossen, dass die einzelnen Lagen des Flächenmaterials nicht ordnungsgemäß und spannungsfrei übereinander angeordnet werden. Die Prozesssicherheit und - genauigkeit wird dadurch erhöht. Fertigungs- und Materialkosten können verringert werden.

Gemäß einer vorteilhaften Ausführungsform ist die Folie mit der Abstandshalterlage fest verbunden, so dass auch die Folie Teil des Multifunktionslaminats ist. In diesem Fall übernimmt das Multifunktionslaminat die zusätzliche Funktion, den Matrix-Zuführraum einschließlich der benachbarten Lagen des Multifunktionslaminats nach außen hin luftdicht abzudichten, so dass der von der Folie umschlossene Raum wirksam evakuiert werden kann. Ein derartiges Multifunktionslaminat verkürzt nochmals die Zeitdauer zum Anordnen des Flächenmaterials über dem Halbzeug und stellt zusätzlich sicher, dass die Folie ordnungsgemäß und spannungsfrei über der Abstandshalterlage angeordnet ist.

Gemäß einer vorteilhaften Ausführungsform weist die Abstandshalterlage eine Vielzahl einzelner, in der Form von Erhebungen ausgebildete Abstandshalter auf. Die Abstandshalter können hierbei gezielt derart angebracht werden, dass der Gasdurchfluss zwischen den Abstandshaltern hindurch parallel zur Membran bzw. zur Folie optimiert werden kann. Alternativ hierzu ist es jedoch auch möglich, für die Abstandshalterlage hoch gasdurchlässige Gewebe, Gewirke, Geflechte und andere Materialien zu verwenden.

Die Erfindung wird nachfolgend anhand der Zeichnungen beispielhaft näher erläutert. Diese zeigen:
- Figur 1 :: einen Schnitt durch eine Vorrichtung zur Herstellung faserverstärkten Kunststoff- Bauteilen zur Veranschaulichung des VAP- Verfahrens gemäß dem Stand der Technik,
- Figur 2 :: eine schematische Darstellung einer ersten Ausführungsform des erfindungsgemäßen Flä- chenmaterials, wobei die einzelnen Lagen lediglich der Deutlichkeit halber vonein- ander beabstandet dargestellt sind, und
- Figur 3 :: eine schematische Darstellung einer zwei- ten Ausführungsform des erfindungsgemäßen Flächenmaterials, wobei die einzelnen La- gen lediglich der Deutlichkeit halber voneinander beabstandet dargestellt sind.

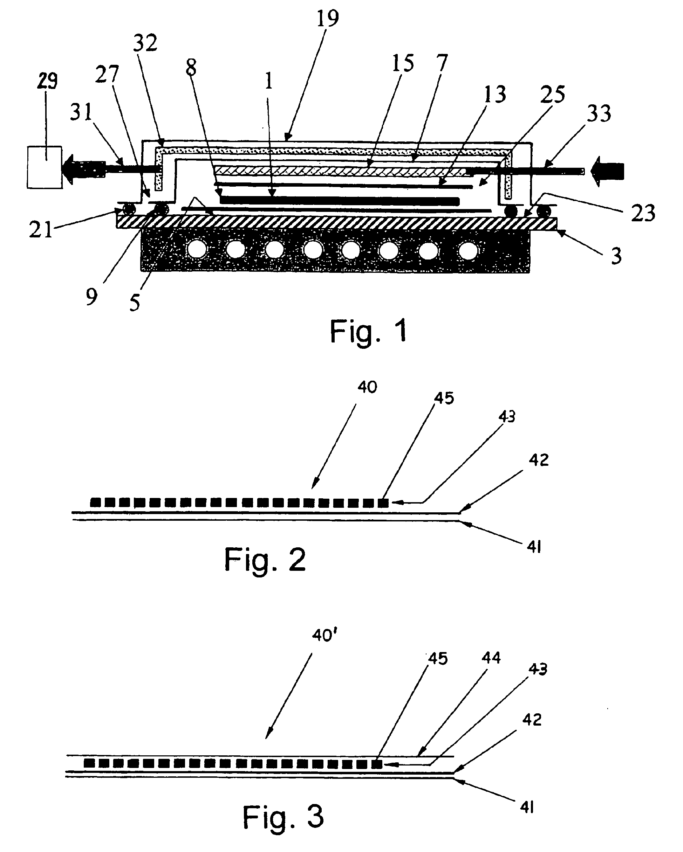

Zunächst wird anhand der Vorrichtung von Figur 1 die VAP-Technologie gemäß dem Stand der Technik näher erläutert.

Die in Figur 1 dargestellte Vorrichtung zeigt ein herzustellendes Bauteil oder trockenes Faserverbund-Halbzeug 1, das auf einem Werkzeug 3 zum Beispiel mittels eines Aufbaus 5 angeordnet ist. Das Bauteil oder Laminat kann dabei ein Kunststoffbauteil aus Kohlefasern (CFK), Glasfasern (GFK), Aramidfasern (AFK), Borfasern (BFK) oder Hybridwerkstoffen sein und insbesondere zur Herstellung unversteifter und versteifter, großflächiger Beplankungsfelder, Kunststoffwerkzeugen oder Schäftungsreparaturen von beschädigten FVW-Bauteilen verwendet werden. Das Werkzeug 3 weist eine zur Aufnahme des Halbzeugs 1 bzw. gegebenenfalls des Aufbaus 5 geeignete Form auf und kann aus verschiedenen geeigneten Materialien, z.B. Holz, Stahl, Blech, Glas und dergleichen, gebildet sein.

Das Bauteil ist mit einer semipermeablen Membran 7 überzogen, die gasdurchlässig ist, jedoch den Durchtritt von Matrix-Material verhindert. Die Membran 7 ist außerhalb der Umfangsfläche 8, aber möglichst dicht am Bauteil 1 mittels einer Dichtung 9 abgedichtet, die der Abdichtung des durch die Membran 7 und der Auflage 5 bzw. der Werkzeugoberfläche 3 gebildeten Innenraums 25 dient. Alternativ kann die Membran 7 auch um das gesamte Bauteil herum geführt sein. Zwischen dem Bauteil 1 und der Membran 7 kann über der gesamten, der Membran 7 zugewandten Oberfläche des Bauteils 1 ein Abreißgewebe 13 (optional) und eine Fließhilfe 15 angeordnet sein, das bzw. die die Funktion hat, die Membran 7 in einem Abstand zur Oberfläche des Bauteils 1 zu halten. Die Fließhilfe 15 kann eine Art Rost oder Gitter oder auch ein steifes Gewebe bzw. Gewirke oder Geflecht sein, welches sich nicht unter Vakuum stark kompaktieren lässt und z.B. aus den Werkstoffen Metall, Kunststoffen oder textilen Halbzeugen besteht.

Die Anordnung aus Aufbau 5, Faserverbund-Halbzeug 1, Membran 7 mit Dichtung 9 sowie mit Abreißgewebe 13 und Fließhilfe 15 ist überdeckt mit einer Folie 19, die gas- undurchlässig ist. Diese ist um den Umfang der Membran 7 herum mit einer Dichtung 21 auf dem Werkzeug 3 abgedichtet, so dass der von der Oberfläche 23 des Werkzeugs 3 und der Innenwand der Folie 19 gebildete Raum 27 zur Umgebung dicht ist. Zwischen der Folie 19 und der Membran 7 ist eine Abstandshalterlage in der Form eines Lüftergewebes 32 eingelegt, welches z.B. ein Glasgewebe, ein Vlies oder ähnliches sein kann. Dieses Lüftergewebe 32 hat die Funktion, die unter anderem durch die Membran 7 hindurch aus dem Raum 27 abgesaugte Luft und Gase entlang der Membranoberfläche zu leiten und dabei die Folie 19 auf Abstand zur Membran 7 zu halten, wenn der Raum mittels einer Vakuumpumpe 29 und einer entsprechenden, in den Innenraum 27 hineinführenden Gasleitung 31 evakuiert wird.

Zur Einführung von Matrix-Material in das Bauteil 1 führen Schläuche oder Leitungen 33, die an einen nicht dargestellten Harzvorratbehälter angeschlossen sind, zur Fließhilfe 15. Der Innenraum 25 stellt somit einen Matrix-Zuführraum dar.

Die Herstellung des faserverstärkten Kunststoff-Bauteils 1 erfolgt bei dem bekannten Verfahren dadurch, dass zunächst das trockene Faserverbund-Halbzeug gemäß konstruktiven Vorgaben positioniert und somit ein Laminataufbau aus den Halbzeugeinzelschichten gebildet wird. Das Werkzeug 3 ist eingetrennt, d.h. mittels Trennmittel oder Trennfolie und Abreißgewebe (zusammen bildet es den Aufbau 5 an der Bauteilunterseite des Bauteils 1) vorbehandelt, um ein Verkleben des Matrix-Werkstoffes mit dem Werkzeug 3 zu verhindern und ein Wiederentfernen des Bauteils (Entformen) von der Werkzeugoberfläche zu ermöglichen. Das trockene Halbzeug des Bauteils 1 ist vorzugsweise mit dem Abreißgewebe 13 versehen. Zusätzlich wird die Fließhilfe 15 oberhalb dieses Aufbaus durch einfaches Auflegen aufgebracht. Auf diese Fließhilfe 15 wird die nur für Luft, aber nicht für Flüssigkeiten durchlässige Membran 7 aufgelegt und mittels der Dichtung 21 abgedichtet. Anschließend wird das Lüftergewebe 32 über die Membran 7 gelegt und mittels der Folie 19 und der Dichtung 21 zur Umgebung abgedichtet. Die Matrixzuführungs-Leitung 33 und die Vakuumleitung 29 werden während dieses Vorganges mit handelsüblichen Durchführungen und Dichtungen gemäß Figur 1 angeordnet.

Nach der Aufbringung der genannten Materialien und der luftundurchlässigen Folie 19 wird der Raum 27 mittels der Vakuumpumpe 29 evakuiert. Gleichzeitig wird ein Matrix-material-Vorratsbehälter an das System angeschlossen, um Matrix-Material in den Innenraum 25 einzuleiten. Durch das Vakuum entsteht ein Druckgefälle, welches das Matrix-Material aus dem Vorratsbehälter in den evakuierten Innenraum 25 saugt. Das Matrix-Material wird nunmehr durch die Fließhilfe 15 und die Zuleitung 33 auf der Bauteiloberfläche verteilt. Vorhandene Luft wird hierbei durch das permanente Absaugen des Innenraumes 25 durch die Membran 7 hindurch entsorgt. Hierbei erfolgt die Infiltration von Matrix-Material von der Bauteiloberfläche senkrecht nach unten in das Laminat. Sobald die vollständige Durchtränkung abgeschlossen ist, wird unter Beibehaltung des gleichen Vakuums die Aushärtung durch eine geeignete Temperatur durchgeführt. Die hierbei durch den chemischen Prozess entstehenden Blasen werden durch die Membran 7 abgeführt.

Nach erfolgter Aushärtung wird das Bauteil entformt, wobei alle Verfahrens-Hilfsstoffe von Hand entfernt werden und letztendlich auch das Bauteil von dem Werkzeug 3 entfernt wird.

Aus den vorstehenden Ausführungen geht hervor, dass bei dem bekannten, anhand von Figur 1 beschriebenen Verfahren die Membran 7, das als Abstandshalterlage wirkende Lüftergewebe 32 und die luftundurchlässige Folie 19 einzeln und nacheinander über dem Bauteil 1 bzw. der Fließhilfe 15 angeordnet werden müssen, was zeitaufwendig ist und die Prozesssicherheit beeinträchtigt.

Anhand von Figur 2 wird im Folgenden eine erste Ausführungsform des erfindungsgemäßen Flächenmaterials beschrieben.

Bei diesem Flächenmaterial handelt es sich um ein Multifunktionslaminat 40, das die Funktionen der in Figur 1 beschriebenen Membran 7 und des Lüftergewebes 32 übernimmt. Das Multifunktionslaminat 40 besteht aus einer Membran 41, einer Textillage 42 und einer Abstandshalterlage 43.

Bei der Membran 41 handelt es sich um eine semipermeable, mikroporöse, hydrophobe Polyurethanmembran, die bei der Niedertemperatur- und Hochtemperatur-VAP-Technologie eingesetzt werden kann, oder um eine semipermeable, mikroporöse, hydrophobe ePTFE-Membran, die insbesondere bei einem Hochtemperatur-VAP-Verfahren eingesetzt wird. Das Multifunktionslaminat 40 wird entsprechend dem Aufbau von Figur 1 derart über dem Halbzeug 1 oder gegebenenfalls über der Fließhilfe 15 (Figur 1) angeordnet, dass die Membran 41 auf der dem Halbzeug 1 zugewandten Seite des Multfunktionslaminats 40 liegt. Die Membran 41 ist einerseits für das in den Innenraum 25 eingeleitete Matrix-Material (Harz) undurchlässig, jedoch für Gase durchlässig, so dass auch der Innenraum 25 durch die Membran 41 hindurch evakuiert werden kann und Gase durch die Membran 41 austreten können.

Die auf die Membran 41 auflaminierte Textillage 42 dient in erster Linie der Verstärkung der Membran 41. Die Textillage 42 kann aus einem Gewebe, Gewirke, Vlies oder Strickware bestehen. Als Material für die Textillage 42 kann insbesondere Polyester, Polyamid, Aramid oder Polypropylen verwendet werden. In jedem Fall ist die Textillage 42 derart ausgebildet, dass die Gasdurchlässigkeit der Membran 41 nicht in unerwünschter Weise beeinflusst wird. Die Verbindung zwischen der Membran 41 und der Textillage 42 kann durch einen Laminierungsprozess erfolgen, bei dem ein feuchtigkeitvernetzendes PU-Klebersystem oder übliche Thermokleber verwendet werden. Der Kleber kann dabei auch punktförmig aufgetragen werden, um die Gasdurchlassigkeit der Membran 41 möglichst wenig zu beeinträchtigen.

Die Abstandshalterlage 43 übernimmt die Aufgabe des Lüftergewebes 32 (Figur 1) und ist so ausgebildet, dass eine auf die Abstandshalterlage 43 aufgebrachte, gas-undurchlässige Folie 44 auf Abstand zur Textillage 42 gehalten wird, wenn der Raum zwischen der Folie 44 und der Textillage 42 (bzw. Membran 41) evakuiert wird. Die Abstandshalterlage 43 besteht im Ausführungsbeispiel von Figur 2 aus einzelnen, voneinander getrennten Abstandshaltern 45, die mit gegenseitigem Abstand auf der Textillage 42 angeordnet sind. Die Höhe der Abstandshalterlage 43 kann zwischen 170 µm und 1.000 µm betragen. Die Abstandshalter 45 sind derart angeordnet, dass beim Evakuieren des Raums 27 (Figur 1) die Gase möglichst ungehindert parallel zur Hauptebene des Multifunktionslaminats 40 zwischen den Abstandshaltern 45 hindurch strömen können. Bei den Abstandshaltern 45 kann es sich beispielsweise um Schaumnoppen handeln. Weiterhin ist es auch möglich, dass die Abstandshalterlage 43 aus hoch gasdurchlässigem textilem Gewebe, Gewirke oder Geflechten besteht. Die Abstandshalterlage 43 ist mit der Textillage 42 fest verbunden, wobei in Abhängigkeit des Materials übliche Klebetechniken eingesetzt werden können.

Das in Figur 2 dargestellte Multifunktionslaminat 40 besteht somit aus einem festen Verbund, bestehend aus Membran 41, Textillage 42 und Abstandshalterlage 43. Bei dieser Ausführungsform ist es erforderlich, die in Figur 3 dargestellte, luft-undurchlässige Folie 44 noch nachträglich auf die Abstandshalterlage 43 aufzulegen.

Aus Figur 3 ist eine zweite Ausführungsform eines erfindungsgemäßen Multifunktionslaminats 40' ersichtlich, die sich von der in Figur 2 dargestellten Ausführungsform nur dadurch unterscheidet, dass die gas-undurchlässige Folie 44 bereits fester Bestandteil des Multifunktionslaminats 40' ist. Die Folie 44 ist dabei an der Oberseite der Abstandshalterlage 43 bzw. der Abstandshalter 45 fest fixiert, insbesondere verklebt, und bildet dadurch eine vierte Laminatschicht. Der übrige Aufbau des Multifunktionslaminats 40', nämlich die Membran 41, Textillage 42 und Abstandshalterlage 43, ist identisch zu demjenigen der Figur 2, so dass diesbezüglich auf die dortige Beschreibung verwiesen wird.

Das Multifuntionslaminat 40' bietet gegenüber dem Multifuntionslaminat 40 den Vorteil, dass auch das separate nachträgliche manuelle Aufbringen der gas-undurchlässigen Folie 44 entfällt, wodurch das Abdichten des zu evakuierenden Raums 27 gegenüber der äußeren Umgebung beschleunigt und sichergestellt wird, dass die Folie 44 optimal auf der Abstandshalterlage 43 liegt.

## Patentansprüche

1. Mehrlagiges, flexibles Flächenmaterial zum Begrenzen eines Matrix-Zuführraums bei der Herstellung von faserverstärkten Kunststoffbauteilen aus Faserverbund-Halbzeugen (1) mittels eines Injektionsverfahrens zur Injektion von Matrix-Material, wobei das Flächenmaterial eine gasdurchlässige, jedoch matrix-undurchlässige Membran (41), eine gas-undurchlässige Folie (44) sowie eine hoch gasdurchlässige Abstandshalterlage (43) aufweist, die zwischen der Membran (41) und der Folie (44) angeordnet ist und die Folie (44) auf Abstand zur Membran (41) hält, wenn zwischen Membran (41) und Folie (44) ein Unterdruck erzeugt wird, **dadurch gekennzeichnet, dass**
- die Membran (41) aus einer semipermeablen, mikroporösen .Polyurethanmembran oder semipermeablen, mikroporösen ePTFE-Membran besteht, auf die eine die Membran (41) verstärkende Textillage (42) auflaminiert ist,
- die Abstandshalterlage (43) auf der Textillage (42) angeordnet ist, und
- die mikroporöse Membran (41), die Textillage (42) sowie die Abstandshalterlage (43)zusammen als Multifunktionslaminat (40, 40') ausgebildet und dadurch fest miteinander verbunden sind.

2. Flächenmaterial nach Anspruch 1, **dadurch gekennzeichnet, dass** die Folie (44) mit der Abstandshalterlage (43) fest verbunden ist, so dass auch die Folie (44) Teil des Multifunktionslaminats (40') ist.

3. Flächenmaterial nach Anspruch 1 oder 2, **dadurch gekennzeichnet, dass** die Abstandshalterlage (43) eine Vielzahl einzelner, in der Form von Erhebungen ausgebildeter Abstandshalter (45) aufweist.

4. Flächenmaterial nach einem der vorhergehenden Ansprüche, **dadurch gekennzeichnet, dass** die Abstandshalterlage (43) eine Dicke von 170 bis 1.000 µm aufweist.

## Claims

1. Multilayer, flexible planar material for delimiting a matrix supply space during the production of fibre-reinforced plastic components from fibre composite semifinished products (1) by means of an injection process for injecting matrix material, the planar material having a gas-permeable, but matrix-impermeable diaphragm (41), a gas-impermeable sheet (44) and also a highly gas-permeable spacer layer (43) which is arranged between the diaphragm (41) and the sheet (44) and holds the sheet (44) at a distance from the diaphragm (41) when a reduced pressure is generated between the diaphragm (41) and sheet (44), **characterized in that**
the diaphragm (41) consists of a semipermeable microporous polyurethane diaphragm or semipermeable microporous ePTFE diaphragm onto which a textile layer (42) reinforcing the diaphragm (41) is laminated,
the spacer layer (43) is arranged on the textile layer (42), and
the microporous diaphragm (41), the textile layer (42) and the spacer layer (43) are jointly embodied as a multifunctional laminate (40, 40') and as a result are securely connected to one another.

2. Planar material according to claim 1, wherein the sheet (44) is securely connected to the spacer layer (43), such that the sheet (44) is also part of the multifunctional laminate (40').

3. Planar material according to claim 1 or 2, wherein the spacer layer (43) has a large number of individual spacers (45) embodied in the form of elevations.

4. Planar material according to anyone of the preceding claims, wherein the spacer layer (43) has a thickness of 170 to 1.000 µm.

## Revendications

1. Matériau plat flexible multicouches destiné à délimiter une chambre d'admission de matrice lors de la fabrication de composants en matière plastique renforcée par des fibres à partir de demi-produits en composites de fibres (1) au moyen d'un procédé d'injection pour l'injection du matériau de matrice, dans lequel le matériau plat comprend une membrane perméable aux gaz et imperméable à la matrice (41), un film imperméable aux gaz (44) ainsi qu'une couche d'écartement (43) hautement perméable aux gaz, qui est agencée entre la membrane (41) et le film (44) et maintient le film (44) à distance de la membrane (41) lorsqu'une dépression est engendrée entre la membrane (41) et le film (44),
**caractérisé en ce que**
- la membrane (41) est une membrane en polyuréthane semiperméable et microporeuse ou une membrane en ePTFE semiperméable et microporeuse, sur laquelle est stratifiée une couche textile (42) qui renforce la membrane (41),
- la couche d'écartement (48) est agencée sur la couche textile (42), et
- la membrane microporeuse (41), la couche textile (42) ainsi que la couche d'écartement (43) sont réalisées ensemble sous forme de stratifié multifonctionnel (40, 40') et ainsi fermement reliées les unes aux autres.

2. Matériau plat selon la revendication 1, **caractérisé en ce que** le film (44) est fermement relié à la couche d'écartement (43), de sorte que le film (44) fait également partie du stratifié multifonctionnel (40').

3. Matériau plat selon la revendication 1 ou 2, **caractérisé en ce que** la couche d'écartement (43) comprend une pluralité d'éléments d'écartement individuels (45) réalisés sous la forme de surélévations.

4. Matériau plat selon l'une des revendications précédentes, **caractérisé en ce que** la couche d'écartement (43) a une épaisseur de 170 à 1000 µm.
